Europäisches Patentamt

European Patent Office

Office européen des brevets

(19)

(11) **EP 1 322 020 A1**

(12) **EUROPEAN PATENT APPLICATION**

(43) Date of publication:
**25.06.2003 Bulletin 2003/26**

(51) Int Cl.$^7$: **H02J 3/06**

(21) Application number: **01811251.6**

(22) Date of filing: **20.12.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ABB RESEARCH LTD.**
**8050 Zürich (CH)**

(72) Inventors:
• **Sensarma, Partha Sarathi**
**5432 Neuenhof (CH)**
• **Rahmani, Mohamed**
**8645 Jona (CH)**

(74) Representative: **ABB Patent Attorneys**
**c/o ABB Schweiz AG**
**Brown Boveri Strasse 6**
**5400 Baden (CH)**

(54) **Power system expansion planning**

(57)     In the inventive method and computer program for power system expansion planning, an optimal selection of a plurality of power network components constituting a network is determined by an optimisation procedure that minimises an objective function comprising investment costs for network components subject to operational constraints, operational costs are expressed by a monetary value computed from power losses incurred during operation of the network, and the objective function comprises said operational costs.

**Fig. 1**

EP 1 322 020 A1

**EP 1 322 020 A1**

**Description**

Field of the Invention

The invention relates to the field of large-scale electric power transmission and distribution networks. It relates to a method and computer program for power system expansion planning as described in the preamble of claim 1 and 10, respectively.

Background of the Invention

Electric power transmission and distribution systems or networks comprise high-voltage tie lines for connecting geographically separated regions, medium voltage lines, and substations for transforming voltages and for switching connections between lines. Expansion planning for a network is necessary when new generators and/or new loads are to be integrated into the network. It comprises the routing of new transmission lines and the placement and selection of transformers, compensation devices etc. A method for optimal expansion planning is described in S. Binato, Mario Veiga F. Pereira and Sergio Granville, "A New Benders Decomposition Approach to Solve Power Transmission Network Design Problems", *IEEE Transactions on Power Systems*, Vol. 16, No. 2, May 2001, pp 235-240. An optimal choice of candidate circuits is found by minimising investment costs, subject to constraints on power flow and operational limits. It is mentioned that operational costs ought to be considered, but no indication is given on how this should be done.

Description of the Invention

It is therefore an object of the invention to create a method and computer program for power system expansion planning of the type mentioned initially, which allow to take operational costs of the network into account.

These objects are achieved by a method and computer program for power system expansion planning according to the claims 1 and 10.

In the inventive method and computer program for power system expansion planning, an optimal selection of a plurality of power network components constituting a network is determined by an optimisation procedure that minimises an objective function comprising investment costs for network components subject to operational constraints, operational costs are expressed by a monetary value computed from power losses incurred during operation of the network, and the objective function comprises said operational costs.

This provides the advantage of considering not only investment but also operational costs in terms of real money. In a further preferred variant of the invention, the power losses in transmission lines and/or transformers and/or compensation devices are computed

In a preferred embodiment of the invention, a routing algorithm for determining an optimal power line trajectory minimises a cost function that comprises costs arising from the kind of terrain and from expected litigation costs for a plurality of surface elements through which a transmission line may be routed.

The computer program for power system expansion planning according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

Further preferred embodiments are evident from the dependent patent claims.

Brief Description of the Drawings

The subject matter of the invention will be explained in more detail in the following text with reference to preferred exemplary embodiments which are illustrated in the attached drawings, in which:

Figure 1    shows a spherical model of the earth;
Figure 2    shows a sub-mesh of the spherical model with labelling conventions;
Figure 3    schematically shows a topology for a three-node network;
Figure 4    schematically shows the network of figure 3 with compensation elements and transformers added;
Figure 5    shows a flow diagram of the inventive method.

The reference symbols used in the drawings, and their meanings, are listed in summary form in the list of reference symbols. In principle, identical parts are provided with the same reference symbols in the figures.

Detailed Description of Preferred Embodiments

In summary, in the inventive method for power system expansion planning, a plurality of power network components is selected and their location is determined. These components form a power transmission network which is an extension to an existing network. For brevity's sake, the term "network", if not qualified otherwise, denotes the extension network.

The approach according to the invention takes an integrated view of network details from an angle of investment as well as operational cost and from an angle of technical reliability.

*Technical inputs* to the network expansion planning approach, described here, are power transfer requirements, nominal voltages and optionally frequency of source and destination power systems and a deviation and maximum difference in power angle between the two power systems. *Associated inputs* are geographical locations of the interface nodes with source and destination systems and details of the geographical terrain and demography of the intervening region. Economic variables are treated as *parameters* for the process. These economic variables are a unit cost of energy, availability and unit cost of electrical equipment and litigation costs for right-of-way for the transmission lines and related constraints. The *outputs* of the planning process are the topology, actual layout and components of the electrical system as well as expected cost and revenue. This approach enables decoupling of main technical issues from the market behaviour and is amenable to a holistic solution.

Optimisation problem:

The *objective function*, to be minimised by the optimisation, considers

- Capital Expenses (CAPEX) for transmission lines and towers, substation and switchgear, transformers, compensation equipment
- Conduction losses in the transmission lines and connected equipment, expressed in monetary terms,
- Security of the network, as dictated by deviation in the bus voltages and angles, resulting in improved Available Transfer Capacity (ATC) , expressed in monetary terms,
- Revenue earned

*Design variables or optimisation variables* (Global Variable Vector - GVV) that are varied in the optimisation are: -

- Topology and actual route of the transmission line
- Choice of nominal voltage for transmission
- Voltage ratio of tap-changing and phase-shifting transformers
- Current rating for lines and series connected equipment in all branches
- Inclusion and rating of shunt reactive power compensators
- Inclusion and rating of series compensators

*Constraints* for the optimisation problem are

- the power flow equations
  The other *constraints* are related to the security limits for system operation and are: -

- overcurrent limits - branch currents must be within specified rating
- voltage deviation limits- there should not be under or over voltage at any node in the system
- power angle limits- there should be enough transient stability margin

A choice of current ratings and voltage ratio for components like transformers influences, in general, their internal impedance. As these have a significant effect on the magnitude and angle of the bus voltages in the power system, the choice of current rating also affects the security limits. This adds another *constraint* to the optimisation model: -

- dependence of internal impedances of transformers (and some other possible series elements) on the choice of rated current and transformation ratio.

The objective function, optimisation variables and constraints are now described in detail:

Formulation of the objective function:

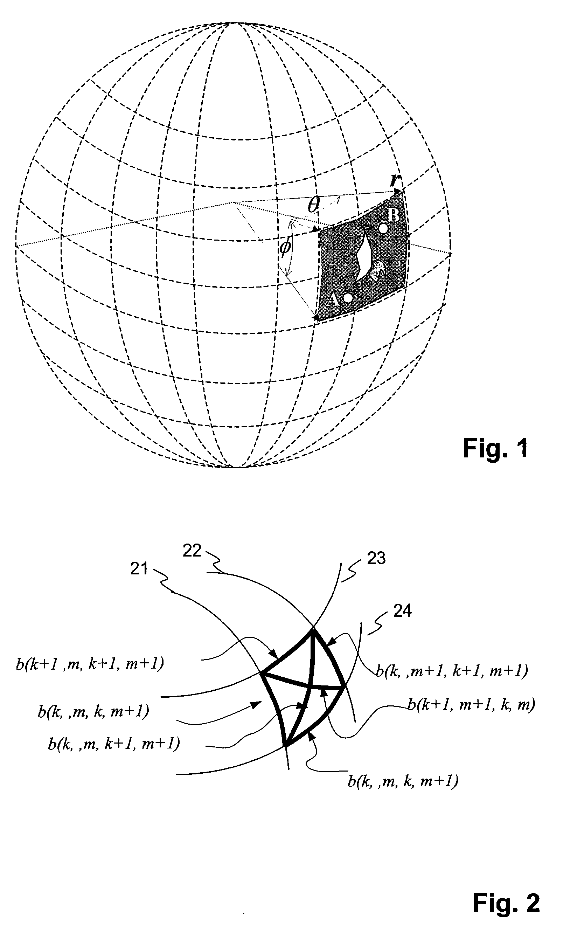

Topology and routing of lines: Considering a surface section on the earth approximated as a sphere, shown in figure 1, let the shaded surface be an area, henceforth called "corridor" where a new transmission system is to be installed. Let A be the position of a new generator and B the bus location of an existing transmission system. The objective is to find an optimal path between the two points, so as to minimise total cost. The white patch within the corridor represents a lake and the adjacent patch indicates a region with high population density, e.g. a city. This simple example shows how relative difficulties and associated costs of routing through different regions is mathematically formulated.

Every location on the earth is characterized by its latitude, longitude and altitude. The latitude and longitude correspond to $\phi$ and $\theta$, respectively, in figure 1. The altitude, $h$, of the location is added to the radius of the earth, $R$, to find the radial co-ordinate, $r$. Thus the straight line distance between two points, $K(r_1, \theta_1, \phi_1)$ and $M(r_2, \theta_2, \phi_2)$ is given by the following equation.

$$l_{KM} = \overline{KM} = \sqrt{x_{KM}^2 + y_{KM}^2 + z_{KM}^2} \tag{1}$$

where,

$$x_{KM} = (r_1 \cos\theta_1 \cos\phi_1 - r_2 \cos\theta_2 \cos\phi_2) \tag{2a}$$

$$y_{KM} = (r_1 \sin\theta_1 \sin\phi_1 - r_2 c \sin\theta_2 \sin\phi_2) \tag{2b}$$

$$z_{KM} = (r_1 \sin\phi_1 - r_2 \sin\phi_2) \tag{2c}$$

$$r = R + h. \tag{2d}$$

Dividing the surface of the corridor by intersecting grid lines at intervals of 1/20th of a degree of latitude and longitude, a mesh is obtained. Coordinates at every intersection of these grid lines are derived from the latitude, longitude and altitude of the particular geographical location. By convention, allowable branches for routing a power line in the mesh are the four boundaries of a sub-mesh and the two diagonals, as shown in figure 2 by bold lines. Assuming that the terrain is uniform within the corridor and also that right-of-way litigation costs do not vary within the corridor, the cost of constructing a line section- using standard technology- between points K and M is

$$C_{segkm} = k_{seg}l_{KM} \tag{3}$$

where $k_{seg}$ is a basic cost per unit of line length. Relaxing the assumption of uniformity of terrain, let every segment within the mesh be assigned a terrain factor, $k_{terr}$. This factor is chosen so that it is unity for the terrain on which it is easiest to build towers and lines and increases in proportion to the fractional increase in the construction cost on a more difficult terrain. So,

$$C_{segkm} = k_{terr} k_{seg} l_{KM}. \tag{4}$$

Relaxing the assumption of uniformity of litigation costs and introducing a factor $k_{lit}$ for every segment, similar considerations as above lead to the following cost for the segment K-M

$$C_{segkm} = k_{lit} k_{terr} k_{seg}l_{KM}. \tag{5}$$

Now, as the construction cost of the line depends on a height of towers, insulators breakdown voltages, a necessity for special conductors etc. which in turn depend on a voltage level, $V$, this influence is introduced in the following manner to arrive at the final costs of the line.

$$C_{segkm} = k_{lit}k_{terr}k_{seg}l_{KM}\left(\frac{V}{V_{base}}\right)^{\kappa} \qquad (6)$$

The constants $k_{lit}$, $k_{terr}$, $k_{seg}$ and $\kappa$ are inputs to the optimisation process and are decided by the existing market costs for the appropriate quantities. $V_{base}$ is the minimum of possible transmission voltage levels. $\kappa$ expresses the influence of voltage level on component cost and is determined e.g. by fitting a curve to existing component data.

For the complete line, the corresponding component of the objective function is the sum of the costs of a set of connected segments between A and B. A relevant technology standard of the line is chosen and the corresponding $k_{tech,line}$ is assigned a value of unity. For other technologies, the technology factor is

$$k_{tech,line} = \frac{\text{cost per mile of line with one technology option}}{\text{cost per mile with standard technology}} \qquad (7)$$

The technology factor represents an a priori choice of e.g. tower and foundation design, insulation, conductor material, etc. made according to national standards and regulations. The right-of-way costs and technology costs for all possible line segments in a four-cornered sub-mesh are entered as input data and also the technology options pertaining to the terrain concerned. Expressing these costs on a per km basis, their sums are used as weighting coefficients (*b*) for all branches. A particular mesh may look as shown in figure 2. The weight for a particular branch is calculated as

$$b = k_{lit}k_{terr}k_{seg}k_{tech,line}\left(\frac{V}{V_{base}}\right)^{\kappa}. \qquad (8)$$

The cost of the line is then calculated as the sum of the costs for each individual segment. It therefore is

$$OF_{line} = \sum_{j=1}^{n}b_jl_j \ . \qquad (9)$$

Selection of nominal voltage: Along with the cost of line construction, the choice of transmission voltage affects almost every other operating parameter of the transmission system. The higher the voltage is, the lower are current and line drops and the lower is the power angle at buses. So, in general, it results in some definite operational benefits and *also* implies additional cost, e.g. due to higher insulation levels of connected equipment. However, as the available options for transmission voltage are just a few standard voltage levels, the optimisation is done individually for each of these voltage levels and the overall optimum is then selected. As nominal voltage is taken to be the base voltage and the total power throughput the base power for normalising variables, the normalised impedances do not change during the optimisation process.

CAPEX for transformers and shunt reactive compensation: The CAPEX for connected equipment is a function of their MVA rating and also of the technology used. Denoting the technology dependent factor by $k_{tech}$, it is defined to be unity for a commonly used technology. For transformers, there are additional costs if there are tap-changers and/or phase-shifters. Denoting this factor by $k_{\alpha}$, it is defined to be zero for transformers with fixed voltage ratio. With these definitions, a corresponding component of the objective function is

$$OF_{CAPEX1} = \sum_{i}k_{tech,q,i}Q_iA_{iq} + \sum_{\substack{i,j \\ i \neq j}}k_{tech,\alpha,ij}S_{ij}(1+k_{\alpha i})A_{\alpha i} \ . \qquad (10)$$

where, the first sum represents shunt compensator cost, the second sum represents transformer cost, *i* and *j* are node indexes, and

*A* is an existence factor, which is a binary variable and is 1 if a corresponding component is present and 0 otherwise,

$Q_i$ is a reactive power (in MVA) of a shunt compensator connected at node $i$,

$S_{ij}$ is the MVA rating of a transformer connected between nodes $i$ and $j$,

$k_{tech}$ depends on whether e.g. a shunt compensator is realised with a capacitor or a FACTS device and also when a transformer uses different insulation materials, for example.

CAPEX for switchgear: Switchgear costs depend on the system voltage, the short-circuit current at the node of installation and the technology used. If the short-circuit current is $I_{sc}$, the corresponding cost in the objective function is modelled as

$$OF_{CAPEX2} = \sum_i k_{tech,sg,i} I_{sc,i} \left( \frac{V}{V_{base}} \right)^{\kappa 1}. \qquad (11)$$

CAPEX for series compensators: This is dependent on the technology (FACTS or passive compensation), the rated current, $I_{rated}$, and the rated compensator impedance, $x_{sc}$. The corresponding cost in the objective function is modelled as

$$OF_{CAPEX3} = \sum_{\substack{i,j \\ i \neq j}} k_{tech,sc,ij} I_{rated,ij}^2 x_{sc,ij} A_{sc,ij}. \qquad (12)$$

As before, $k_{tech,sc}$ is the technology dependent coefficient and $A_{sc}$ is the existence factor.

Losses in the lines and connected equipment: The energy losses in the lines occur due to copper and corona losses; however, the corona losses are not considered here. For the compensating equipment, the internal power losses are taken to be a fixed proportion, $\lambda$, of their rated MVAr which for shunt compensators is given by $Q$ and for series compensators computed from rated current $I_{rated}$ and rated impedance $x$ as $I_{rated}^2 x$. The lumped equivalent cost at the time of investment is as follows

$$OF_{loss} = C_E \left( \sum_{\substack{i,j \\ i \neq j}} I_{ij}^2 r_{ij} + \sum_i \lambda_i Q_i A_{q,i} + \sum_{\substack{i,j \\ i \neq j}} \lambda_{ij} I_{rated,sc,ij}^2 x_{ij} A_{sc,ij} \right) \tau \frac{(1-d)}{(1-d^\tau)} \times 0.008766.$$

$$(13)$$

where the three sums represent, from left to right, copper losses, losses in shunt compensators and losses in series compensators, and

$C_E$ is a unit price of energy in \$/MWh,

$\tau$ is an expected lifetime of the network or project and

$d$ is an annual rate of depreciation.

The term 0.008766 corrects for the different units of time implicit in the energy price (hours), lifetime (years) and depreciation (years).

Transmission revenue: This depends on the type of contract between the network system operator (ISO) and transacting utilities. If it is a fixed return contract, this component of the objective function is expressed as

$$OF_{revenue} = C_{con} \tau \frac{(1-d)}{(1-d^\tau)} \times 0.008766. \qquad (14)$$

If only the transferred energy is paid for, then the corresponding expression is

$$OF_{revenue} = C_E \tau \frac{(1-d)}{(1-d^\tau)} \times \int_0^{1\,year} P.dt \, . \tag{15}$$

Other types of contract are easily implemented without changing the scope of the invention.

Composite Objective Function: The objective function to be minimised is therefore

$$OF = OF_{line} + OF_{CAPEX1} + OF_{CAPEX2} + OF_{CAPEX3} + OF_{loss} - OF_{revenue} \tag{16}$$

It is to be noted that the last term is a revenue term and all other terms are cost terms. As the problem is to be posed as a minimisation problem, the revenue term is introduced in the composite objective function with a negative sign. The cost terms are introduced with a positive sign.

Optimisation variables:

Line routing: The optimisation variables are a set of co-ordinates, which lie along the path of the line. A valid set is a subset of the set of all the corners of the mesh (refer section 3.1.1). The constraint is that the first and last points in the set should be the co-ordinates of the extremities of the line.

So,

$$GVV_1 = \{(h_k, \phi_k, \theta_k), k = 1, 2, ..., n\}. \tag{17}$$

Other variables: The other variables are the nominal voltage, rated current of branches (and the series components), series reactance of compensator, shunt injected reactive power, voltage ratio of transformers ($\alpha$) and choice of technology for equipment. The voltage ratio of transformers $\alpha$ is the transformer ratio and is, in general, a complex quantity. It represents the ratio for normal, tap-changing and phase-shifting transformers. So,

$$GVV_2 = \{I_{rated}, Q, x, \alpha, k_{tech}\} \tag{18}$$

that is, these optimisation variables comprise the rated current $I_{rated}$ and the impedance $x$ of each series component, the MVAr $Q$ rating of each shunt compensator, the phase/angle shift capability $\alpha$ of each transformer and the technology factor $k_{tech}$ for each component. A composite global variable vector comprising all optimisation variables is

$$GVV = \{GVV_1, GVV_2\}. \tag{19}$$

Constraints of optimisation process:

Equality constraints: There are two sets of equality constraints, which are slightly different in nature. The first is the set of power flow equations, which are expressed as

$$S_i = V_i^* \sum_j (Y_{ij} V_j) \, , \; i=1,2,.....,N \, , \tag{20}$$

where,

*N is the number of nodes in the system*
$Y_{ij}$ *is the admittance of branch ij,*
$V_j$ *is the node voltage at one end of branch ij*
$V_i^*$ *is the complex conjugate of the node voltage at the other end of branch ij*
$S_i$ *is the complex power injected into node i.*

The other set of equality constraints define a functional dependence of internal impedances of the branches and connected equipment on the selection of nominal voltage, rated current and voltage ratio (in case of tap-changing/phase shifting transformers). These are stated in general form, valid for any type of component, as

$$Z_{ij} = f(I_{ij,rated}, V_{rated}, \alpha_{ij}, x_{cij}). \tag{21}$$

For example, a characteristic value $\alpha$ of a transformer may influence its internal impedance, the rated current $I_{rated}$ of a line or series compensator will affect the line or compensator impedance, and the rated series compensator impedance, $x_c$. will affect the actual compensator impedance as well. Note that a difference between rated and actual impedance arises for the following reasons: Rated impedance of a transformer is stated as a function of the rated voltage and current or of the rated voltage and MVA. So, for the same actual ohmic impedance, the rated (in per-unit or percentage) impedance will vary for a different rated current. For phase-shifting and tap-changing transformers, the impedance model for Power Flow Analysis is expressed as a function of the transformer ratio $\alpha$. For conductors, a different rated current calls for a different conductor geometry and/or conducting material which obviously changes the ohmic impedance of the conductor. Although the rated current changes as well, the rated impedance will be different, in general. For series compensators, the line impedance is directly affected by the amount of series compensation such as capacitive impedance inserted in the line.

Inequality constraints: Inequality constraints define maximum security limits. First, overload constraints are

$$\|I_{branch,ij}\| \leq I_{rated,ij}. \tag{22}$$

A limit on voltage deviation is stated as

$$\|1 - v_i\| \leq \Delta v_{limit}. \tag{23}$$

A limit on the bus voltage angle ($\delta$) is stated as

$$\|\delta_i\| \leq \delta_{lim\ it}. \tag{24}$$

Optimisation procedure: Particle Swarm Optimisation (PSO) is a recently developed optimisation technique, which belongs to the category of heuristic, random-search algorithms. In its original form, it was developed to model flocking behaviour of birds. It was observed that although each bird was apparently free to move independently, there was some form of information sharing between members of a swarm. Later developments helped it to be viewed as an optimisation technique. For details, see e.g. Yuhui Shi and Russell Eberhart, "A Modified Particle Swarm Optimizer", *Proceedings of IEEE International Conference on Evolutionary Computation,* Anchorage, May 1998, pp 74-77.

Mathematical formulation: This algorithm guides the movement of a search agent $x$ from a position $x^{(k)}$ to the next position at $x^{(k+1)}$, within the valid solution space. During the course of search, each agent keeps track of its personal co-ordinates ($p_{best}$) which best satisfies the performance criteria, so far. Correspondingly, co-ordinates ($g_{best}$) which best satisfy the performance criteria so far for the whole swarm is also updated at every iteration. The following relations decide the movement of the agent.

$$v^{(k+1)} = w_1 v^{(k)} + C_1.rand_1.(p_{best} - x^{(k)})$$
$$+ C_2.rand_2.(g_{best} - x^{(k)}) \tag{25a}$$

$$x^{(k+1)} = x^{(k)} + v^{(k+1)}. \tag{25b}$$

where,

$w_1$, $C_1$, $C_2$ are constants, and
$rand_1$, $rand_2$ are random numbers between 0 and 1.

Choice of the constants is governed by convergence requirements, as shown in the abovementioned reference. The random numbers, $C_1$ and $C_2$, are outputs of separate random processes with uniform density functions.
Before running the particle swarm optimisation, the following initialisation steps are performed:

Step1: choice of nominal voltage: For convenience, the objective function is separately evaluated at each typical voltage level. This step simplifies the entire optimisation procedure.

Step 2: choice of optimal topology: As mentioned before, the transmission corridor is divided by latitude and longitude lines, separated by 1 /20$^{th}$ of a degree, resulting in a distance of approximately 3 miles between adjacent corners of the mesh (figure 2). The starting corner can be either end of the proposed line. For each corner thereafter, the possible options are to get connected to any one of 8 possibilities. The constraint is that the final corner in a chosen set should be the other end of the line. A particular route, *Rue,* therefore gets defined by a sequence of *(n-1)* corners, apart from the two terminal nodes. Mathematically, this set is given as

$$Rue = \{(k_1, m_1), (k_2, m_2), \ldots, (k_{n-1}, m_{n-1})\}. \tag{26}$$

Step 3: choice of optimal network equipment: After arriving at the optimal network topology, the impedance data for possible conductors at this voltage level are collected. Information about the voltage levels in the surrounding network is also acquired. At this step, the following quantities are considered.

- Current ratings of all branches and series connected equipment
- Inclusion and rating of shunt compensation
- Inclusion and rating of series compensation
- Voltage-ratio of transformers

Optimisation starts with augmenting the network, with compensation possibilities at the following feasible locations.

■ Shunt compensators are added at the mid-point of each line, at newly defined nodes, are represented as P-Q buses, that is, load nodes, which are characterized by the power, P, and reactive power, Q, *drawn* from the network. . P, which represents the internal losses of the compensator, is a fixed proportion of the delivered Q. Also, P is defined with a positive sign and Q is defined with a negative sign.
■ Ties with neighbouring systems are provided with tap-changing and phase-shifting transformers.
■ Series compensators are introduced in all other lines. These are modelled as additional branch admittances.

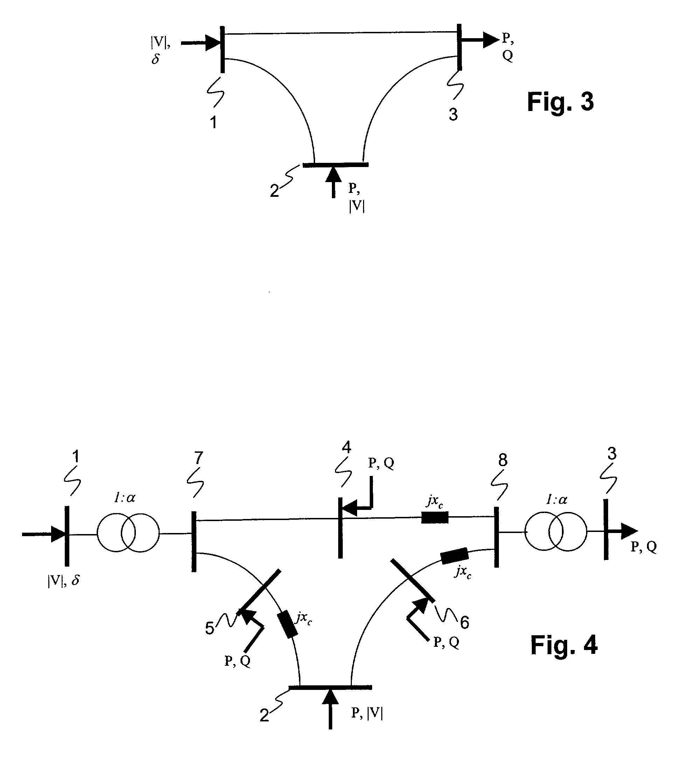

Figure 3 schematically shows a topology for a three-node network with nodes 1,2 and 3. Variable names at each node indicate Voltage magnitude $|V|$, phase angle $\delta$, active power $P$ and reactive power $Q$ that are assumed to be given for the respective node in order to perform a load flow analysis. For a load node, $P$ and $Q$ are given, for a generator node, P and $|V|$ are given, and for a slack node, $|V|$ and $\delta$ are given. Assuming that figure 3 represents the optimised topology, the corresponding augmented network is shown in figure 4. Nodes 4, 5 and 6 are introduced to enable shunt injection of reactive power. Blocks marked "$jx_c$" are series compensation elements. Nodes 7 and 8 are introduced to accommodate the inter-area transformers. Thus, the final GVV is

$$GVV = [Rue \ I_{rated} \ Q_c \ x_c \ \alpha]^T. \tag{27}$$

Software implementation:

Steps to ensure convergence: The reason for loss of convergence is the issue of the GVV moving out of the valid solution space. This is avoided by bringing back the GVV to the closest point on the boundary after an overshoot has been detected. As far as the PSO algorithm is concerned, the coefficients are selected in accordance with the rules reported in the reference cited above (Shi et al.).

Approaching optimality: The problem with the minimum bound of compensators necessitates a graded reduction of the lower bound. The lower bound cannot be made zero as this might cause ill-conditioning of the numerical system. For the series compensators, if the final solution stays at the lower bound, then the previous loop is re-run by excluding the compensator. It is then observed whether this alteration improves the objective function. If it does, then the new solution is preferred.

In summary, an optimal selection of a plurality of power network components constituting a power transmission network is determined by minimising an objective function that comprises investment costs for network components. The minimisation is subject to operational constraints. The method comprises the steps of

- computing electric power losses incurred during operation of the network, computing a corresponding monetary value from the power losses by multiplying losses with an expected future energy cost, and
- computing operational costs of the network that comprise said monetary value.

The objective function comprises said operational costs. The minimisation is achieved by iteratively repeating the above steps and varying design or optimisation variables GVV until an optimised lower value of the objective function is arrived at. Each set of GVV's defines a candidate network configuration that must satisfy the given constraints.

In a preferred variant of the inventive method, the operational constraints comprise limit values on voltages, voltage angles, power and current flow. In each optimisation step, a load flow analysis of a candidate network configuration is made, in which load flow calculation voltages, voltage angles power and current flow values are computed, and said voltages, power and current flow values are compared with the corresponding limits and, if at least one of the limit values is exceeded, the corresponding candidate network configuration is rejected.

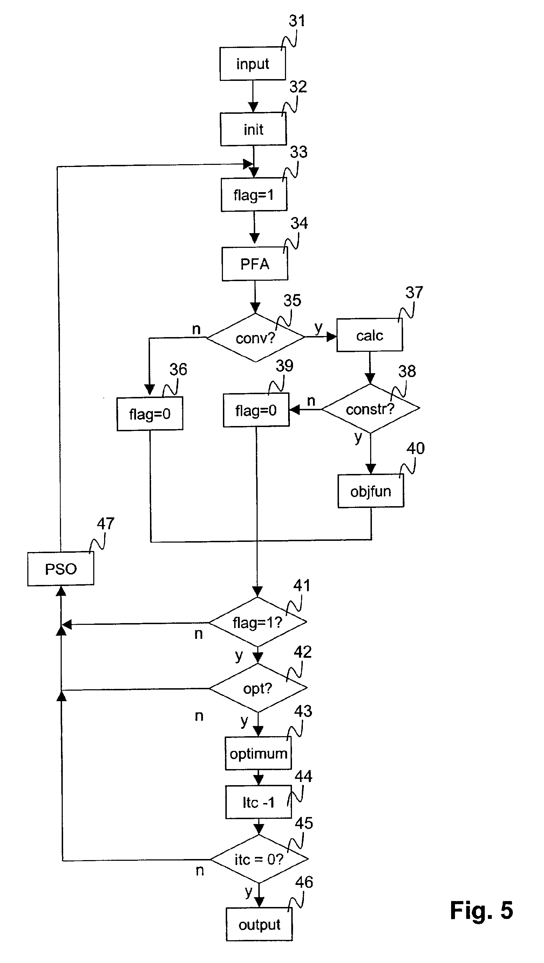

Figure 5 shows a flow diagram of a preferred variant of the inventive method and computer program. Input data for the program are the following.

- Geographical data for the entire region enclosed by the transmission corridor($h, \phi, \theta$) and terrain details
- Details of existing and upcoming generator and load location
- Weighting coefficients (*b*) for all segments comprising the mesh in the geographical area of the transmission corridor
- Possible nominal voltages for transmission
- Technology costs per MVA for shunt compensators ($k_{tech,q}$) and transformers ($k_{tech,a}$) additional costs in case of phase-shifting/tap-changing transformers
- Technology costs for switchgear per kA of breaking current at nominal voltage ($k_{tech,sg}$)
- Technology costs for series compensator per MVA ($k_{tech,sc}$)
- Average energy cost per MWh ($C_E$)
- Project lifetime ($\tau$)
- Rate of depreciation (*d*)
- Maximum/minimum ratings for compensation and other equipment

The selection of nominal voltage is not shown in the flow diagram since a particular value of the nominal voltage is assumed before proceeding with the rest of the optimisation. The method according to figure 5 is therefore repeated for a small number of possible nominal voltage levels.

In block 31, the input data is obtained. In block 32, step 2 "choice of optimal topology" of the optimisation procedure is performed. The output gives the basic topology of the proposed network. It also gives the cost of erecting the line and the impedance of each of the component branches. The topology is the basis for the subsequent electrical power flow analysis and the possible introduction of necessary correcting and or compensating equipment. Step 3 "choice of optimal network equipment" is performed, including the augmentation of the network. Boundary conditions and the GVV for the optimisation routine are defined. Also, in block (32), the content (itc) of an iteration counter is initialised with the number of iterations to be performed.

In block 33, a flag is set to be 1. In block 34, a power flow analysis (PFA) is performed using the optimal topology, with its various branch properties, the generator and load data and the compensating equipment details. If the supplied data is feasible and the PFA routine is numerically robust, then the solution converges. In block 35, convergence is tested. If there is no convergence, the flag is set to 0 in block 36 and execution continues with block 41. Otherwise, in block 37, all values for the branch and node variables are computed. In block 38, it is verified whether the constraints of optimisation are not violated. If they are, the flag is set to 0 in block 39 and execution continues with block 41. Otherwise, in block 40, the total objective function is evaluated. In block 41, it is checked whether the flag is equal to one. If it is not, execution continues with block 47. Otherwise, in block 42, it is checked whether the solution is optimal in the sense of the PSO. If it is not, execution continues with block 47. If it is, in block 43 the cost and the electrical configuration and parameters of the current optimal solution are calculated and execution continues with block 44. In block 44, the content (itc) of the iteration is decremented by 1 and execution continues with block 45. In block 45, it is checked whether the content (itc) of the iteration counter is equal to zero. If it is, in block 46, the cost, electrical configuration and parameters of the overall optimal solution is output. Otherwise, execution continues with block 47. In block 47, the PSO method updates the GVV and execution continues with block 33.

Technical reliability of individual system components influences the failure probability of lines and of the entire network. Such failures are usually penalised with a monetary value, according to a contract between the network operators and their customers. Therefore, in a preferred embodiment of the invention, costs associated with such a risk are taken into account in the optimisation: For a candidate network configuration, a failure probability $p_{ij}$ for each line is computed. This is done with established procedures from reliability theory, using the list of components of the candidate configuration, its topology, and statistical data about component failure probabilities.

From the results of the power flow analysis, the MVA power flow $S_{ij}$ through each transmission line segment is computed, and a failure impact $F_{ij}$, defined as .

$$F_{ij} = \rho_{ij} S_{ij}. \tag{28}$$

is determined.

The lines are ordered in descending order of failure impact. A user-defined predetermined number $ipf$ of lines with the largest failure impact is selected. For each of these lines, a loss of delivered power that occurs when the line is removed from the system is computed. Each such loss of line is considered a contingency and an overall mean penalty cost $OF_{pen}$ is computed as a sum, over all contingencies considered, of contingency costs weighted with the associated contingency probability

$$OF_{pen} = \sum_{i=1}^{ipf} p_i C_i . \tag{29}$$

where $p_i$ is the contingency probability, which is equal to the failure probability $p_{ij}$ of the line associated with the contingency, and $C_i$ is a contingency cost that comprises contractual penalty costs. Penalty costs are expressed as one or more if-then-else clauses and/or polynomial functions that compute a cost according to which line has failed and/or the amount of nondelivered energy.

The mean penalty cost $OF_{pen}$ is incorporated in the composite objective function according to eq. (16), which therefore for this embodiment is

$$OF = OF_{line} + OF_{CAPEX_1} + OF_{CAPEX_2} + OF_{CAPEX_3}$$

$$+ OF_{loss} + OF_{pen} - OF_{revenue}$$

A regret function defined as

$$\sigma = \sqrt{\sum_{i=1}^{ipf} p_i (C_i - OF_{pen})^2} . \tag{30}$$

is saved for each candidate configuration as a qualifier and is made available, should this configuration be found to be the optimal one. If two candidate solution networks have the same value for their composite objective function *OF,* then the one with the smaller regret function is chosen and output.

List of designations

| 1..8 | power network nodes |
|---|---|
| 21 | m-th longitude mesh line |
| 22 | (m+1)th longitude mesh line |
| 23 | (k+1)th latitude mesh line |
| 24 | k-th latitude mesh line |
| 31 | get input data |
| 32 | initialise optimisation |
| 33 | set flag to 1 |
| 34 | power flow analysis |
| 35 | test for convergence |
| 36 | set flag to 0 |
| 37 | calculate all branch and node quantities |
| 38 | test for constraint satisfaction |
| 39 | set flag to 0 |
| 40 | evaluate total objective function |
| 41 | test flag |
| 42 | test for optimality of solution |
| 43 | store current optimal solution |
| 44 | decrement iteration counter content |
| 45 | test iteration counter content |
| 46 | output final optimal solution |
| 47 | use PSO to update GVV |

**Claims**

1. A method for power system expansion planning, in which an optimal selection of a plurality of power network components (1,2,..8) constituting an electric power network is determined by an optimisation procedure that minimises an objective function comprising investment costs for network components (1,2,..,8) subject to operational constraints,
   **characterized in that** the method comprises the steps of

   • computing electric power losses incurred during operation of the network,
   • computing a corresponding monetary value from the power losses,
   • computing operational costs of the network that comprise said monetary value,

   and **in that** the objective function comprises said operational costs.

2. The method according to claim 1, wherein electric power losses in at least one of transmission lines, transformers and compensation devices are computed.

3. The method according to one of the preceding claims, wherein operational costs of the network are computed over an expected lifetime of the network and from these operational costs, a lumped equivalent cost $OF_{loss}$ at a time of investment is computed.

4. The method according to one of the preceding claims, wherein a routing algorithm for determining an optimal power line trajectory minimises a cost function $OF_{line}$ that comprises costs arising from the kind of terrain and from expected litigation costs for a plurality of surface elements through which a transmission line may be routed.

5. The method according to one of the preceding claims, wherein network components are **characterized by** optimisation variables GVV that are varied by the optimisation procedure, and wherein the optimisation variables comprise at least one of

- rated current $I_{rated}$ of a component,
- rated reactive power $Q$ of a compensating component,
- rated impedance $x$ of a component,
- transformer ratio $\alpha$, and
- a technology coefficient $k_{tech}$ representing a choice of available technologies for implementing a given electrical function.

6. The method according to one of the preceding claims, wherein the operational constraints comprise limit values on voltages, power and current flow and where in an optimisation step, a load flow analysis of a candidate network configuration is made, in which load flow calculation voltages, power and current flow values are computed, said voltages, power and current flow values are compared with the corresponding limits and, if at least one of the limit values is exceeded, the corresponding candidate network configuration is rejected.

7. The method according to claim 6, wherein internal impedances of network components (1,2,..8) used in the load flow analysis are functionally dependent on at least one the optimisation variables **characterising** the network or its components (1,2,..8).

8. The method according to claim 6 or 7, wherein, for at least one line in a candidate network configuration, a line failure probability is computed from line component data, and that an overall mean penalty cost is computed from the at least one line failure probability and included in the objective function.

9. The method according to one of the preceding claims, wherein the optimisation is done by using particle swarm optimisation.

10. A computer program, loadable into an internal memory of a digital computer, comprising computer program code means to make, when said program is loaded in the computer, the computer execute the computer execute the method of one of the preceding claims.

**Fig. 1**

$b(k+1,m, k+1, m+1)$

$b(k, ,m, k, m+1)$

$b(k, ,m, k+1, m+1)$

$b(k, ,m+1, k+1, m+1)$

$b(k+1, m+1, k, m)$

$b(k, ,m, k, m+1)$

**Fig. 2**

Fig. 3

Fig. 4

Fig. 5

**European Patent Office**

## EUROPEAN SEARCH REPORT

Application Number

EP 01 81 1251

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | NANGIA U ET AL: "Optimal weight assessment based on a range of objectives in a multiobjective optimal load flow study" IEE PROCEEDINGS: GENERATION, TRANSMISSION AND DISTRIBUTION, INSTITUTION OF ELECTRICAL ENGINEERS, GB, vol. 145, no. 1, 15 January 1998 (1998-01-15), pages 65-69, XP006011118 ISSN: 1350-2360 * page 65, column 1, paragraph 2 * * page 65, column 2, paragraph 4 * * page 66, column 1, paragraph 1 * * page 67, column 2, paragraph 5 * * page 68, column 1, paragraph 2 * * page 66, column 2, paragraph 2 * | 1 | H02J3/06 |
| Y | * page 66, column 1, paragraph 2 * | 2 | |
| Y | * page 67, column 1, paragraph 7 * * page 66, column 1, paragraph 2 * | 3 | |
| Y | * page 68, column 1, paragraph 2 * | 4 | TECHNICAL FIELDS SEARCHED (Int.Cl.7) |
| Y | * page 65, column 2, paragraph 3 * | 5 | |
| Y | * page 65, column 1, paragraph 5 * | 6 | H02J |
| Y | * page 65, column 2, paragraph 4 * * page 65, column 1, paragraph 5 * | 7 | |
| Y | * page 66, column 1, paragraph 6 * | 8 | |
| Y | * page 66, column 1, paragraph 4 * | 9 | |
| Y | * page 66, column 2, paragraph 2; figure 1 * | 10 | |

---

-/--

The present search report has been drawn up for all claims

| Place of search | Date of completion of the search | Examiner |
|---|---|---|
| MUNICH | 27 June 2002 | Kanelis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 01 81 1251

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | MOMOH J A: "A generalized multiple objective corrective measure for power system operation" EEE TRANSACTIONS ON POWER SYSTEMS, IEEE INC. NEW YORK, US , 1990, XP010090169 * page 253, column 1, paragraph 3 * | 1 | |
| Y | * page 253, column 2, paragraph 1 * | 2 | |
| Y | * page 253, column 1, paragraph 3 * | 5,6 | |
| Y | * page 253, column 1, paragraph 2 * | 7 | |
| Y | TANG Y: "POWER DISTRIBUTION SYSTEM PLANNING WITH RELIABILITY MODELING AND OPTIMIZATION" IEEE TRANSACTIONS ON POWER SYSTEMS, IEEE INC. NEW YORK, US, vol. 11, no. 1, 1 February 1996 (1996-02-01), pages 181-189, XP000589720 ISSN: 0885-8950 * page 182, column 1, paragraph 2; figure 1 * | 3,4 | |
| Y | * page 185, column 2, paragraph 5 * | 10 | TECHNICAL FIELDS SEARCHED (Int.Cl.7) |
| Y | ASGARPOOR S ET AL: "EXPECTED COST PENALTY DUE TO DEVIATION FROM ECONOMIC DISPATCH FOR INTERCONNECTED POWER SYSTEMS" IEEE TRANSACTIONS ON POWER SYSTEMS, IEEE INC. NEW YORK, US, vol. 10, no. 1, 1 February 1995 (1995-02-01), pages 441-447, XP000513607 ISSN: 0885-8950 * page 443, column 2, paragraph 4 * * page 444, column 1, paragraph 2 * | 8 | |

-/--

The present search report has been drawn up for all claims

| Place of search | Date of completion of the search | Examiner |
|---|---|---|
| MUNICH | 27 June 2002 | Kanelis, K |

EPO FORM 1503 03.82 (P04C01)

**European Patent Office**

# EUROPEAN SEARCH REPORT

Application Number

EP 01 81 1251

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EL-GALLAD A I ET AL: "Swarm intelligence for hybrid cost dispatch problem" CANADIAN CONFERENCE ON ELECTRICAL AND COMPUTER ENGINEERING 2001. CONFERENCE PROCEEDINGS (CAT. NO.01TH8555), CANADIAN CONFERENCE ON ELECTRICAL AND COMPUTER ENGINEERING 2001. CONFERENCE PROCEEDINGS, TORONTO, ONT., CANADA, 13-16 MAY 2001, pages 753-757 vol.2, XP007074668 2001, Piscataway, NJ, USA, IEEE, USA ISBN: 0-7803-6715-4 * abstract * | 9 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 27 June 2002 | Kanelis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)